Europäisches Patentamt

European Patent Office

Office européen des brevets

(19)

(11) Veröffentlichungsnummer : **0 084 831**
**B1**

(12) **EUROPÄISCHE PATENTSCHRIFT**

(45) Veröffentlichungstag der Patentschrift :
16.04.86

(21) Anmeldenummer : 83100318.1

(22) Anmeldetag : 17.01.83

(51) Int. Cl.⁴ : **A 23 L   1/16**

(54) Teigware.

(30) Priorität : 21.01.82 DE 3201765

(43) Veröffentlichungstag der Anmeldung :
03.08.83 Patentblatt 83/31

(45) Bekanntmachung des Hinweises auf die Patenterteilung : 16.04.86 Patentblatt 86/16

(84) Benannte Vertragsstaaten :
AT BE FR GB IT NL

(56) Entgegenhaltungen :
DE-A- 2 327 897
FR-A- 2 137 872
FR-A- 2 282 813
GB-A- 1 174 133
US-A- 1 924 826
US-A- 3 703 379
CHEMICAL ABSTRACTS, Band 91, 1979, Seite 523, Nr. 139194p, Columbus, Ohio, USA
FOOD TECHNOLOGY, Band 27, Nr. 8. August 1973, Seiten 46-53, J.L. ROSSEN et al.: "Food extrusion"

(73) Patentinhaber : Flessner GmbH & Co
Ludwigstrasse 17-19
D-6078 Neu-Isenburg (DE)

(72) Erfinder : Mohr, Günter, Dipl.-Ing.
Waldstrasse 18
D-6078 Neu-Isenburg (DE)
Erfinder : Mouths, Eberhard W.
Niedertalstrasse 4
D-6456 Langenselbold (DE)
Erfinder : Lichtsinn, Hartmut
Goethering 34
D-6072 Dreieich (DE)
Erfinder : Werner, Horst
Berliner Allee 51
D-6070 Langen (DE)

(74) Vertreter : Glawe, Delfs, Moll & Partner Patentanwälte
Postfach 26 01 62 Liebherrstrasse 20
D-8000 München 26 (DE)

## Beschreibung

Die Erfindung betrifft eine Teigware, die durch Behandlung mit heißem Wasser ohne zusätzliches Kochen in verzehrfertigen Zustand gebracht werden kann.

Teigwaren der vorstehend genannten Art können gattungsmäßig als « Instant-Nudeln » bezeichnet werden. Derartige Teigwaren sind z. B. aus der DE-AS 26 59 027 bekannt. Diese Nudeln werden hergestellt, indem man rohe Nudeln zunächst mit einem eßbaren Öl und einem Emulgiermittel behandelt. Durch das Emulgiermittel soll die Oberflächenspannung des Wassers vermindert werden, um das Eindringen des heißen Wassers zu erleichtern. Anschließend werden die so behandelten Nudeln bedampft, damit sich ein bestimmter α-Umwandlungsgrad der Stärke einstellt. Schließlich wird die Nudel bei Temperaturen von mehr als 60 °C getrocknet. Andere bekanntgewordene Instant-Nudeln weisen in ihrem Inneren eine poröse Struktur auf, um die Wasseraufnahmefähigkeit zu erhöhen (DE-OS 28 46 045). Die DE-OS 25 38 594 schließlich betrifft Instant-Nudeln auf der Basis von Weizengrieß, wobei der Weizengrieß mit Wasser gemischt und der erhaltene Teig bei Temperaturen zwischen 90-110 °C einer Hochdruckextrusion unterworfen wird, um ein Gelieren der Stärke zu erreichen.

Die vorstehend genannten Instant-Nudeln weisen im verzehrfertigen Zustand entweder eine für Nudeln atypische Konsistenz oder einen durch verschiedene Zusätze bedingten atypischen Geschmack auf.

Die Erfindung ist auf eine Teigware der eingangs genannten Art gerichtet, die nach Übergießen mit heißem oder kochendem Wasser innerhalb von 1,5 bis 8 Minuten in einen verzehrfertigen Zustand gebracht werden kann.

Da kochendes Wasser, z. B. aus Warmwasserbereitern, häufiger zur Verfügung steht als eine übliche Kochmöglichkeit, wird die Zubereitung der Teigwaren erheblich vereinfacht.

Die vorgenannte Aufgabe wird erfindungsgemäß durch eine Teigware gelöst, die durch Extrusion eines Teiges der folgenden Zusammensetzung :

60 bis 80 Gew.-Teile Weichweizengrieß, der bis zu 50 Gew.-% Hartweizengrieß enthalten kann, 2 bis 5 Gew.-Teile Kochsalz und 1,0 bis 2,5 Gew.-Teile eines Emulgators, sowie gegebenenfalls farbgebende Zusätze und Gewürze, der auf einen Feuchtigkeitsgehalt von 20 bis 35 Gew.-% eingestellt worden ist, bei einer Extruder Temperatur von 130-250 °C, insbesondere 150-200 °C, sowie durch Trocknen des extrudierten Produktes auf eine Endfeuchte von 10-12 Gew.-% erhältlich ist.

Erfindungsgemäß wird für den einzusetzenden Weizengrieß Weichweizengrieß eingesetzt. Hartweisengrieß mit hohem Proteingehalt und sehr guter Kleberqualität ist nur bedingt geeignet, da dieser Kleber sehr straff, unelastisch und « kurz » ist. Dadurch wird eine zu enge Struktur der Teigware erhalten, die das Eindringen des Wassers erschwert. Man kann jedoch dem Weichweizengrieß in solchen Fällen Hartweizengrieß zusetzen, wenn die Rehydratationszeit der Teigware verlängert werden soll. Zu berücksichtigen ist in diesen Fällen, daß dann die Konsistenz der verzehrfertigen Nudel in unerwünschter Weise verändert werden kann. Insgesamt kommt man noch zu brauchbaren Ergebnissen, wenn der Weizengrieß aus einem Gemisch von Hart- und Weichweizengrieß im Verhältnis von 1 : 1 besteht.

Während der Gelatinierung koaguliert das Eiweiß bei den Extrudertemperaturen ; dagegen wird die Stärke aufgeschlossen und zieht beim Zusammentreffen mit Wasser dieses begierig an und bindet es augenblicklich und in großen Mengen.

Kochsalz wird hauptsächlich zur Geschmacksbeeinflussung zugegeben. Es hat aber auch einen Einfluß auf die Proteinlöslichkeit und auf die Bildung des Protein-Stärke-Komplexes durch den ebenfalls erfindungsgemäß zuzusetzenden Emulgator. Die Bildung dieses Komplexes ist notwendig, um die spezifischen Eigenschaften der Teigwaren der Erfindung zu bewirken. Weiterhin senkt der Emulgator die Oberflächenspannung des Wassers und erleichtert das Eindringen in das Produkt. Der Emulgator hat aber auch wesentlichen Einfluß auf die Konsistenz des rehydratisierten Produktes. Bevorzugt verwendet man Glycerinmonostearat. Es hat sich als vorteilhaft erwiesen, den Emulgator vor der Zugabe zu dem Teig durch Auflösen in warmem Wasser, z. B. mit einer Temperatur von 80 °C im Verhältnis von 1 : 4, zu rehydratisieren. Durch intensives Rühren erhält man eine stabile Emulsion, die dann in den Teig eingearbeitet wird.

Als farbgebender Zusatz hat sich insbesondere Eigelbpulver als geeignet erwiesen, das gleichzeitig auch eine Geschmacksverbesserung bewirkt.

Gemäß einer weiteren vorteilhaften Ausführungsform der Erfindung kann man dem Teig bis zu 0,01 Gew.-%, bezogen auf Teigtrockengewicht, Ascorbinsäure zusetzen. Dieser Zusatz bewirkt eine Straffung des Weizenklebers, wobei die Auflösung von Stärke und Eiweiß bei der Rehydratisierung verhindert werden kann.

Die vorgenannten Ausgangsstoffe werden in handelsüblichen Mischern, die eine gute Verteilung des zuzusetzenden Wassers gewährleisten, gründlich gemischt, wobei man so viel Wasser hinzusetzt, daß der Teig einen Wassergehalt von 20 bis 35 Gew.-% aufweist.

Die Extrusion des so erhaltenen Teiges kann in Ein- oder Mehrschneckenextrudern erfolgen. Erfindungsgemäß beträgt die Extrudertemperatur 150-200 °C. Der Extrusionsdruck beträgt vorzugsweise 60-140 bar. Die Verweilzeiten für den Teig im Extruder können abhängig von der Temperatur in dem Extruder sein ; sie betragen vorzugsweise 3-8 Minuten.

Die extrudierte Teigware kann jede beliebige, bekannte Form aufweisen. Es ist lediglich darauf zu achten, daß die Teigware eine bestimmte Dicke nicht übersteigen soll, weil sonst eine zu lange Rehydratationszeit erhalten wird oder der Kern der Teigware hart bleibt.

Im allgemeinen enthalten die Teigwaren nach dem Extrudieren in Abhängigkeit von der Ausgangsfeuchte und den Extrusionsbedingungen 15-25 Gew.-% Wasser. Nach der Extrusion wird daher erfindungsgemäß ein Trockenprozeß nachgeschaltet, um die Teigwaren auf eine Endfeuchte von 10-12 Gew.-% zu bringen. Die Trocknung sollte schonend erfolgen, um das Auftreten von Haarrissen in den Teigwaren zu vermeiden. Besonders geeignet sind Bandtrockner einer an sich bekannten Art, die bei längeren Passagezeiten und niedrigen Temperaturen arbeiten. Es sind jedoch auch andere, geeignete Trocknungsmethoden, z. B. Trocknung auf Horden, denkbar.

Weitere vorteilhafte Merkmale der Erfindung ergeben sich aus dem folgenden Ausführungsbeispiel.

In einem handelsüblichen Mischer, der eine gute Verteilung des zuzusetzenden Wassers gewährleistet, wird ein Teig der folgenden Zusammensetzung bereitet :

4,000 kg Weichweizengrieß
0,075 kg Salz
0,150 kg Eigelbpulver
0,100 kg Glycerinmonostearat
0,005 kg Ascorbinsäure
1,150 kg Wasser.

Der so bereitete Teig wird in einem Einschneckenextruder zu einer nudelförmigen Instant-Teigware extrudiert, wobei die Verweilzeit des Teiges in dem Extruder 5 Minuten, die Temperatur des Teiges an der Austrittsdüse 110 °C (entsprechend einer Temperatur des Teiges in dem Extruder von 170 bis 180 °C) und der Extrusionsdruck 80 bar beträgt.

Das extrudierte Produkt wird anschließend auf Horden auf eine Endfeuchte von 10 bis 12 % getrocknet. Das Produkt ist nach Übergießen mit kochendem Wasser und einer Rehydratationszeit von 5 Minuten verzehrfertig.

### Patentansprüche

1. Teigware, die durch Behandlung mit heißem Wasser ohne zusätzliches Kochen in verzehrfertigen Zustand gebracht werden kann, erhältlich durch Extrusion eines Teiges der folgenden Zusammensetzung :
60 bis 80 Gew.-Teile Weichweizengrieß, der bis zu 50 Gew.-% Hartweizengrieß enthalten kann,
2 bis 5 Gew.-Teile Kochsalz und
1,0 bis 2,5 Gew.-Teile eines Emulgators,
sowie gegebenenfalls farbgebende Zusätze und Gewürze, der auf einen Feuchtigkeitsgehalt von 20 bis 35 Gew.-% eingestellt worden ist, bei einer Extruder Temperatur von 130-250 °C, insbesondere 150-200 °C, sowie durch Trocknen des extrudierten Produktes auf eine Endfeuchte von 10-12 Gew.-%.

2. Verfahren zur Herstellung der Teigware nach Anspruch 1, dadurch gekennzeichnet, daß die Verweilzeit für den Teig in dem Extruder 3-8 Minuten beträgt.

3. Verfahren nach Anspruch 2, dadurch gekennzeichnet, daß der Extrusionsdruck 60-140 bar beträgt.

4. Verfahren nach Anspruch 2 oder 3, dadurch gekennzeichnet, daß man als Emulgator Glycerinmonostearat verwendet.

5. Verfahren nach einem der Ansprüche 2 bis 4, dadurch gekennzeichnet, daß man den Emulgator vor der Zugabe zu dem Teig durch Auflösen in warmem Wasser rehydratisiert.

6. Verfahren nach einem der Ansprüche 2 bis 5, dadurch gekennzeichnet, daß man als farbgebenden Zusatz Trockeneigelbpulver verwendet.

7. Verfahren nach einem der Ansprüche 2 bis 6, dadurch gekennzeichnet, daß man dem Teig bis zu 0,01 Gew.-%, bezogen auf Teigtrockengewicht, Ascorbinsäure zusetzt.

### Claims

1. Paste articles, which can be made ready for consumption by treatment with hot water without additional cooking, obtainable by extrusion of a paste of the following composition :
60 to 80 parts by weight soft wheat semolina, which can contain up to 50 % by weight hard wheat semolina,
2 to 5 parts by weight cooking salt and
1.0 to 2.5 parts by weight of an emulsifier, and possibly colouring agents and seasoning, which has been given a moisture content of 20 to 35 % by weight, with an extruder temperature of 130 to 150 °C, in particular 150 to 200 °C and by drying of the extruded products to a final moisture content of 10 to 12 % by weight.

2. Method for the production of paste articles according to Claim 1, characterised in that the residence time for the paste in the extruder amounts to 3 to 8 minutes.

3. Method according to Claim 2, characterised in that the extrusion pressure amounts to 60 to 140 bars.

4. Method according to Claim 2 or 3, characterised in that one uses glycerine monostearate as the emulsifier.

5. Method according to one of Claims 2 to 4, characterised in that the emulsifier is rehydrated by dissolving it in warm water before it is added to the paste.

6. Method according to one of Claims 2 to 5, characterised in that dry egg yolk powder is used as the colouring agent.

7. Method according to one of Claims 2 to 6, characterised in that ascorbic acid up to 0.01 % by weight with respect to the dry weight of the paste is added to the paste.

### Revendications

1. Pâtes alimentaires qui sont mises dans l'état prêt à la consommation par traitement par l'eau chaude sans ébullition supplémentaire, obtenues par extrusion d'une pâte ayant la composition suivante :

60 à 80 parties en poids de semoule de blé tendre, qui peut contenir jusqu'à 50 % en poids de semoule de blé dur,

2 à 5 parties en poids de sel de cuisine et

1,0 à 2,5 parties en poids d'un émulsionnant, ainsi que, le cas échéant, des additifs colorants et des condiments, pâte qui a été réglée à une teneur en humidité de 20 à 35 % en poids, à une température de l'extrudeuse de 130 à 250 °C, en particulier de 150 à 200 °C, ainsi que par séchage du produit extrudé à une humidité finale de 10 à 12 % en poids.

2. Procédé pour la fabrication des pâtes alimentaires selon la revendication 1, caractérisé en ce que la durée de séjour de la pâte dans l'extrudeuse est de 3 à 8 mn.

3. Procédé selon la revendication 2, caractérisé en ce que la pression d'extrusion est de 60 à 140 bars.

4. Procédé selon la revendication 2 ou 3, caractérisé en ce qu'on utilise du monostéarate de glycérine comme émulsionnant.

5. Procédé selon l'une quelconque des revendications 2 à 4, caractérisé en ce qu'on réhydrate l'émulsionnant, avant son addition à la pâte, par dissolution dans l'eau chaude.

6. Procédé selon l'une quelconque des revendications 2 à 5, caractérisé en ce qu'on utilise une poudre de jaune d'œuf séchée comme additif colorant.

7. Procédé selon l'une quelconque des revendications 2 à 6, caractérisé en ce qu'on ajoute à la pâte jusqu'à 0,01 % en poids, par rapport au poids à l'état sec de la pâte, d'acide ascorbique.